# EUROPÄISCHE PATENTSCHRIFT

(11) **EP 3 863 819 B1**
(45) Veröffentlichungstag und Bekanntmachung des Hinweises auf die Patenterteilung: **02.09.2026**
(21) Anmeldenummer: 19786541.3
(22) Anmeldetag: 08.10.2019
(51) Int. Cl.: B28B 1/00, B28B 3/20, B28B 3/22, E04B 1/35, E04B 2/84, E04G 21/04, B33Y 30/00

(54) **DRUCKKOPF ZUM DRUCKEN DREIDIMENSIONALER STRUKTUREN AUS BETON UND VERFAHREN DAZU**
PRINT HEAD FOR PRINTING THREE-DIMENSIONAL STRUCTURES MADE OF CONCRETE AND METHOD THEREFOR
TÊTE D'IMPRESSION POUR IMPRIMER DES STRUCTURES TRIDIMENSIONNELLES EN BÉTON ET PROCÉDÉ ASSOCIÉ

(30) Priorität: 08.10.2018 DE 102018217141
(43) Veröffentlichungstag der Anmeldung: 18.08.2021
(73) Patentinhaber: B.T. Innovation GmbH, 39116 Magdeburg (DE)
(72) Erfinder: VON LIMBURG, Felix, 39108 Magdeburg (DE); HEESEMANN, Ingo, 39112 Magdeburg (DE)
(74) Vertreter: Grünecker Patent- und Rechtsanwälte PartG mbB
(86) Internationale Anmeldenummer: PCT/EP2019/077234
(87) Internationale Veröffentlichungsnummer: WO 2020/074521

(56) Entgegenhaltungen:
- CN-A- 105 216 333
- CN-A- 105 216 333
- DE-A1- 2 517 059
- DE-C- 965 687
- DE-C- 965 687
- DE-C- 965 687
- FR-A- 933 162
- FR-A- 933 162
- FR-A- 933 162
- US-A- 5 656 230
- US-A- 5 656 230
- US-A1- 2007 138 678
- US-A1- 2007 138 678
- US-A1- 2010 257 792
- US-A1- 2010 257 792
- US-A1- 2011 079 935
- US-A1- 2011 079 935
- US-A1- 2014 252 668
- US-A1- 2014 252 668
- US-A1- 2018 071 949
- US-A1- 2018 071 949

## Beschreibung

Die vorliegende Erfindung betrifft einen Druckkopf zum Drucken dreidimensionaler Strukturen aus Beton und ein Verfahren dazu.

DE 25 17 059 A1 zeigt einen Druckkopf nach dem Oberbegriff des Anspruchs 1.

FR 933 162 A und DE 965 687 C zeigen eine Strangpresse, in der ein Presstempel zum Pressen von Beton hin- und herbewegt wird.

US 2018/071949 A1 zeigt einen Druckkopf für Zementmischungen, bei dem Material über Düsen in einen formgebenden Abschnitt gebracht wird und daraus über einen Austrittsabschnitt entgegen der Vorschubrichtung austritt.

Weitere Druckköpfe, bei denen Material aus Düsen austritt, sind in US 2014/252 668 A1, US 2010/257 792 A1 und US 2007/138 678 A bekannt.

Beton ist global ein gut verfügbarer Rohstoff, der sich mit passenden Fertigungstechnologien beinahe frei formen lässt. Dabei können Betonfertigteile oder Halbfertigteile industriell gefertigt werden oder der Beton kann direkt auf der Baustelle verarbeitet werden. Insbesondere bei der letzten Anwendung, der Ortsbetonbauweise, ist der Arbeitsaufwand beim Stellen der Schalung hoch und dadurch kostenintensiv. Der 3D Druck ermöglicht es auf der Baustelle Beton ohne Schalung in Form zu bringen. Dabei ist die Technologie im Bereich des 3D Drucks noch nicht ausgereift und ist derzeit mit vielen Problemen verbunden. Ziel ist es ortungebunden, auf einer Baustelle, komplexe Geometrien zu drucken, wie beispielsweise ganze Häuser. Bekannt ist diese Technologie durch Dokument US 2007/0138678 A1, welches offenbart, wie im 3D-Druck üblich, schichtweise zementgebundenes Material aufzutragen. Das zementgebundene Material wird extrudiert und verlässt dabei unausgehärtet nach unten den Auslass einer Düse. Zum Glätten der Außenseiten des Materials sind Platten unterhalb des Düsenauslasses angeordnet, die als Kelle fungieren und ein seitliches Austreten des Materials, quer zur Vorschubrichtung der Düse, verhindern. Beim Austritt aus der Düse weitet sich das Material auf und breitet sich innerhalb der seitlichen Platten sowohl in Vorschubrichtung als auch entgegen der Vorschubrichtung der Düse aus. Die Ausbreitung entgegen der Vorschubrichtung wird durch den Vorschub der Düse ermöglicht, die damit in einer Richtung entgegen der Vorschubrichtung Platz für das aus der Düse austretende Material schafft. Die Ausbreitung in Vorschubrichtung kann allerdings die Oberflächenqualität der abzulegenden Schicht durch Anstauen von Material und Ausquellen des Materials negativ beeinflussen.

Dies ist besonders nachteilig an Stellen, wo hohe Präzision gewünscht ist wie bei Stürzen für Fenster und Türen. Ein Aufstauen des Materials kann beispielsweise durch Schwankungen in der Vorschubgeschwindigkeit der Düse auftreten. Weiterhin ist der herkömmlich aufgebrachte Beton in gewissem Maße fließfähig und verläuft entsprechend der Schwerkraft nach unten und bildet dabei bauchige Strukturen in den einzelnen Schichten aus. Die Fugen zwischen den einzelnen Schichten haben häufig nur einen schlechten Verbund untereinander, weshalb diese Wände in der Regel schlechtere charakteristische Werte aufweisen, als herkömmliche Betonfertigteile aus einem Guss. Deshalb ist für Strukturen gemäß des Standes der Technik eine aufwändige und teure Nachbearbeitung nötig.

Weiterhin wird beim Stand der Technik die nächste Schicht erst aufgedruckt, wenn die darunterliegende Schicht ausreichende Festigkeit besitzt, was die Technologie langsam macht und dazu führt, dass die gedruckten Betonelemente eine miserable Oberflächenqualität aufweisen.

Aus dem Stand der Technik ist es ferner bekannt neben Massivwänden auch Hohlkörper auszubilden, beispielsweise durch paralleles Drucken von 2 Strängen des extrudierten Materials. Im Nachgang können solche Hohlkörper mit einem Bewehrungskorb und Beton gefüllt werden. Dabei haben die Betonwände keine Verbundanker oder ähnliches eingebunden. Aufgrund dessen können die Wände beim Verfüllen nur wenig Betoninnendruck standhalten. In Konsequenz kann somit nur mit geringen Betoniergeschwindigkeiten beim Verfüllen des Hohlraums mit Ortbeton gearbeitet werden.

Es ist daher eine Aufgabe der vorliegenden Erfindung stabile Strukturen aus Beton in kurzer Zeit zu fertigen.

Diese Aufgabe wird gelöst durch einen Druckkopf gemäß Anspruch 1.

Gemäß einem ersten Aspekt der vorliegenden Erfindung wird dabei ein Druckkopf zum Drucken dreidimensionaler Strukturen aus Beton bereitgestellt, wobei der Druckkopf ausgestaltet ist, im Raum bewegt zu werden und einzelne Schichten eines Betonmaterials, welches die zu fertigende Struktur bildet, übereinander abzulegen. Der Druckkopf weist dabei Folgendes auf: eine Zuführeinrichtung, die ausgestaltet ist, das Betonmaterial bereitzustellen, eine Fördereinrichtung, die ausgestaltet ist, das Betonmaterial von der Zuführeinrichtung aufzunehmen und zu fördern, einen formgebenden Abschnitt, der ausgestaltet ist, von dem unter Druck stehenden Betonmaterial gefüllt zu werden und zumindest die seitlichen Abmessungen der abzulegenden Schicht festzulegen, einen entgegen einer Vorschubrichtung des Druckkopfs weisenden Austrittsabschnitt, wobei der Druckkopf weiterhin aufweist: einen Austrittsverhinderungsabschnitt, der ausgestaltet ist, ein Austreten des Betonmaterials in Richtung der Vorschubrichtung des Druckkopfs zu verhindern. Die Fördereinrichtung ist weiterhin eine Schneckeneinrichtung.

Der Druckkopf weist die Zuführeinrichtung auf, die es erlaubt, den im Raum beweglichen Druckkopf mit Betonmaterial zu versorgen. Das Material kann beispielsweise über eine Betonpumpe in die Zuführeinrichtung gespeist werden, während der Druckkopf sich im Raum bewegt. Dabei hat der Druckkopf inklusive Material eine geringe Masse, was es erlaubt den Druckkopf präzise im Raum zu bewegen und die Abstützung des Druckkopfs erleichtert. Andererseits kann der Druckkopf aber auch vor dem Bewegungsvorgang mit Material befüllt werden. Die Fördereinrichtung ist eine Schnecke , die neben der Förderung des Materials in den formgebenden Abschnitt auch den Druck des Betonmaterials erhöhen kann. Dadurch, dass das Material unter Druck den formgebenden Abschnitt befüllt, kann das Material den formgebenden Abschnitt über die ganze Breite des formgebenden Abschnitts, quer zur Vorschubrichtung des Druckkopfs bzw. quer zur Längserstreckung der abzulegenden Schicht, befüllen und dabei bereits unter Druck anfangen abzubinden. Somit können durch den formgebenden Abschnitt zumindest die seitlichen Abmessungen der abzulegenden Schicht festgelegt werden. Das im Querschnitt zumindest bezüglich der seitlichen Abmessungen festgelegte Material tritt aus einem Austrittsabschnitt, der entgegen der Vorschubrichtung weist, ins Freie aus ohne die seitlichen Abmessungen zu verändern, da besonders im Falle eines Materials mit geringem Verhältnis an Wasser zu Zement das Material eine gute Formstabilität besitzt. Durch den zusätzlichen Austrittsverhinderungsabschnitt kann ein Austreten des Betonmaterials aus dem Druckkopf in Vorschubrichtung verhindert werden. Damit lässt sich die Schicht entlang einer definierten Richtung ablegen und ein Betonmaterialaufstau vor dem Druckkopf kann unterbunden werden. Somit kann eine stabile Schicht mit guter Oberflächenqualität abgelegt werden.

Vorzugsweise weist der Druckkopf einen Druckausgleichsabschnitt auf, der sich vorzugsweise innerhalb des formgebenden Abschnitts befindet.

Durch Schwankungen der Vorschubgeschwindigkeit oder der Materialkonsistenz können Druckschwankungen in dem Druckkopf auftreten. Durch den Druckausgleichsabschnitt können diese Druckschwankungen ausgeglichen werden, sodass durch Druckschwankungen hervorgerufene Leckströmungen bzw. Rückströmungen unterbunden werden können und das Betonmaterial mit guter Oberflächenqualität aus dem Austrittsabschnitt austritt. Vorzugsweise ist der Druckausgleichsabschnitt in dem formgebenden Abschnitt vorgesehen, da dort das Material noch formbar ist.

Gemäß einem weiteren Aspekt der Erfindung kann der Druckkopf weiterhin eine Energiezuführeinrichtung aufweisen, die ausgestaltet ist, dem Betonmaterial innerhalb des formgebenden Abschnitts Energie zuzuführen.

Durch die Energiezuführeinrichtung kann das Abbinden des Materials beschleunigt werden, so dass das Material aus dem Austrittsabschnitt im Wesentlichen formbeständig austritt. Beispielsweise kann der formgebende Abschnitt durch vibrierende Einheiten zusätzlich Energie in den Beton einleiten, was die Formstabilität des Materials nach dem Auslassen verbessert. Damit wird weiterhin die Stabilität und Oberflächenqualität der Struktur erhöht.

Der formgebende Abschnitt weist eine regelbare Profilierungseinrichtung auf, die ausgestaltet ist, die Schichtdicke der abzulegenden Schicht variieren zu können.

Durch die regelbare Profilierungseinrichtung besteht die Möglichkeit mit ein und demselben Druckkopf Schichten verschiedener Dicke abzulegen. Dabei kann die Dicke der Schicht, also die Höhe der Schicht, von Schicht zu Schicht unterschiedlich gestaltet werden sowie auch innerhalb einer Schicht in Längsrichtung der Schicht oder auch in Breitenrichtung der Schicht.

Gemäß einem weiteren Aspekt der Erfindung ist die Profilierungseinrichtung dabei so ausgestaltet, zumindest einen Abschnitt entlang der Breitenrichtung der Schicht aus Betonmaterial bezüglich der Schichtdicke konkav auszubilden.

Wird zumindest ein Abschnitt entlang der Breitenrichtung der Schicht konkav ausgebildet, kann Material der darüber liegenden Schicht einfach in diesen konkaven Abschnitt strömen. Dabei kommt es zu einem Formschluss benachbarter Schichten, welcher eine gute Stabilität der gedruckten Struktur sicherstellt.

Gemäß noch einem weiteren Aspekt kann die Profilierungseinrichtung ausgestaltet sein, zumindest abschnittsweise zumindest zwei parallel zueinander verlaufende, beabstandete Stränge auszubilden.

Dabei kann die Profilierungseinrichtung den Querschnitt in Breitenrichtung teilweise komplett verschließen. Dadurch kann z.B. in der Mitte des Querschnitts in Breitenrichtung der Betonausfluss unterbunden werden und eine Art Doppelwand in einem Druckvorgang erstellt werden, wobei zwei parallel verlaufende beabstandete Stränge ausgebildet werden.

Vorzugsweise bildet die Profilierungseinrichtung die Druckausgleichseinrichtung.

Ist die Profilierungseinrichtung befähigt, Druckschwankungen auszugleichen, können diese Druckschwankungen durch lokale Änderungen der Schichtdicke ausgeglichen werden. Diese Schichtdickenänderungen können mit den darüber liegenden Schichten ausgeglichen werden. Weiterhin kann durch diesen Aspekt die Komplexität des Druckkopfs reduziert werden.

Gemäß einem weiteren Aspekt kann die Profilierungseinrichtung zumindest ein elastisches Element und zumindest eine Klappe aufweisen, wobei die Klappe über das elastische Element an dem Druckkopf angebracht ist.

Mit Hilfe der Klappe kann die Schichtdicke durch Variation der Klappenstellung verändert werden. Das elastische Element befähigt die Klappe bei Druckschwankungen ihre Stellung entsprechend anzupassen.

Gemäß einem weiteren Aspekt der Erfindung kann der Druckkopf weiterhin eine Bindematerialverarbeitungseinrichtung aufweisen, die ausgestaltet ist, zwischen benachbarte Schichten des Betonmaterials zumindest eine Schicht aus einem Bindematerial abzulegen.

Das Bindematerial bewirkt eine bessere Anbindung der einzelnen Schichten aus Betonmaterial aneinander. Da der Druckkopf eine Bindematerialverarbeitungseinrichtung aufweist, kann durch ein und denselben Druckkopf vor dem Ablegen einer Schicht aus Betonmaterial eine Schicht aus Bindematerial abgelegt werden. Die Stabilität der Struktur wird dabei im Wesentlichen durch die Schichten aus Betonmaterial gewährleistet, wobei die Schichten des Bindematerials eine gute Anbindung der Schichten aus Betonmaterial gewährleisten.

Vorzugsweise weist die Bindematerialverarbeitungseinrichtung einen sich im Wesentlichen nach unten öffnenden Austrittsabschnitt auf.

Damit kann das Bindematerial durch Wirkung der Schwerkraft auf die darunterliegende Schicht aus Beton aufgebracht werden, was eine einfache Verarbeitung ermöglicht. Ist die Bindematerialverarbeitungseinrichtung weiterhin in Vorschubrichtung an einem vorderen Ende des Druckkopfs vorgesehen, kann durch den im Anschluss über die Bindematerialschicht laufenden Druckkopf die Bindemittelschicht glatt gestrichen und gleichmäßig verteilt werden, sodass das Bindematerial weitestgehend flächendeckend zwischen gedruckten Betonschichten aufgetragen werden kann.

Gemäß noch einem weiteren Aspekt kann der Druckkopf zusätzlich ein Magazin zum Lagern von Bewehrungselementen oder Verbindungselementen, und eine Bewehrungseinsatzeinrichtung aufweisen, die ausgestaltet ist, Bewehrungselemente oder Verbindungselemente horizontal oder vertikal in die Schichten aus Betonmaterial einzusetzen.

Somit können durch den Druckkopf automatisch Bewehrungselemente oder Verbindungselemente eingesetzt werden. Diese können noch innerhalb des Druckkopfes in das noch nicht abgebundene Betonmaterial eingesetzt werden oder auch in einem bereits abgelegten Abschnitt, der durch die Profilierungseinrichtung konkav ausgebildet wurde, eingesetzt werden, wobei dann das Material der darüber liegenden Schicht den konkaven Abschnitt ausfüllen würde und das Bewehrungselement einbetonieren würde. Die Bewehrungseinrichtung kann beispielsweise Bewehrungselemente in Längserstreckung einer Schicht einsetzen, indem die Bewehrungselemente in den noch nicht abgebundenen Beton innerhalb des formgebenden Abschnitts kontinuierlich eingespeist werden. Denkbar ist aber auch, dass Bewehrungselemente quer zur Vorschubrichtung des Druckkopfs in die Schichten eingesetzt werden.

Die Bewehrungselemente müssen dabei nicht vertikal in dem Beton angeordnet sein, um aufeinanderliegende Schichten zu verbinden, sondern können beispielsweise auch beim Drucken einer Doppelwand im Wesentlichen horizontal in die beiden Wandteile eingebunden werden. Dadurch erhalten die gedruckten Betonelemente einen Verbund untereinander, wodurch diese verbundenen Doppelwände mit höherer Betoniergeschwindigkeit verfüllt werden können, als gedruckte Doppelwandaufbauten ohne Verbundanker.

Gemäß einem weiteren Aspekt kann der Druckkopf weiterhin eine Scheibenglättungseinrichtung aufweisen, die ausgestaltet ist, die Übergänge der bereits abgelegten Schichten abzureiben und dadurch zu glätten, wobei die Scheibenglättungseinrichtung vorzugsweise ausgestaltet ist, den Druckkopf zu führen.

Gemäß diesem Aspekt kann die Oberflächenqualität der zu druckenden Struktur weiter verbessert werden. Weiterhin kann der Druckkopf durch die Scheibenglättungseinrichtung geführt werden. Dabei wird eine Bewegung des Druckkopfs in einer Richtung quer zur Vorschubrichtung durch Anschlagen der Scheibenglättungseinrichtung an den bereits abgelegten Schichten unterbunden.

Gemäß einem weiteren Aspekt der Erfindung ist ein Verfahren nach Anspruch 10 vorgesehen, bei dem ein Druckkopf der vorgenannten Art Schichten aus Betonmaterial übereinander ablegt, wobei als Betonmaterial ein Beton mit trockenem Mischungsverhältnis verwendet wird.

Vorzugsweise weist der Beton ein Wasser/Zement Verhältnis zwischen 0,23 und 0,35 auf. Betone mit diesem Mischungsverhältnis erreichen in kurzer Zeit ausreichende Formstabilität, womit sich nach dem Austrittsabschnitt des Extruders eine Schicht mit guter Oberflächenqualität und Maßhaltigkeit erzielen lässt.

Gemäß einem weiteren Aspekt der Erfindung können während der Vorschubbewegung des Extruders, Variationen der Schichtdicke der darunterliegenden Schicht erfasst werden und eine Anpassung der Schichtdicke der abzulegenden Schicht vorgenommen werden.

Somit kann eine ohne aufwändige Nachbearbeitung im Wesentlichen ebene Oberseite der Struktur erreicht werden.

Weitere Einzelheiten und bevorzugte Ausführungsformen werden mit nachfolgenden Figuren verdeutlicht.

Es zeigen:
- Fig. 1: den erfindungsgemäßen Druckkopf
- Fig. 2A: eine Schrägansicht des Druckkopfes aus Fig. 1
- Fig. 2B: eine Schrägansicht des Druckkopfes aus Fig. 2A
- Fig. 3: eine weitere Ausführungsform des erfindungsgemäßen Druckkopfes in einer Schnittansicht
- Fig. 4: eine Querschnittsansicht durch das verarbeitete Betonmaterial
- Fig. 5: den erfindungsgemäßen Druckkopf mit Blickrichtung auf den Austrittsabschnitt
- Fig. 6: eine Querschnittsansicht durch das verarbeitete Betonmaterial
- Fig. 7: eine mit Hilfe des erfindungsgemäßen Druckkopfs gefertigte Doppelwand in Draufsicht

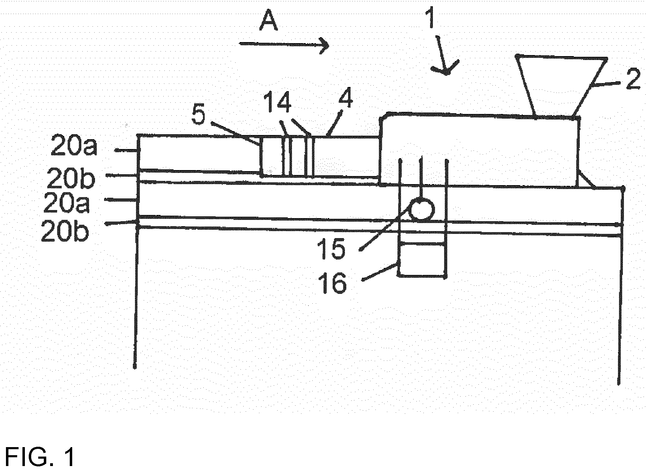

Fig. 1 zeigt schematisch einen im Einsatz befindlichen erfindungsgemäßen Druckkopf 1, durch den bereits mehrere Schichten eines Betonmaterials 20a und mehrere Schichten eines Bindematerials 20b abgelegt wurden, um eine dreidimensionale Struktur aus Beton zu drucken. Der Druckkopf bewegt sich dabei mit einer bestimmten Vorschubgeschwindigkeit entlang einer Richtung des Pfeils A, die die Längserstreckung der einzelnen Schichten definiert. Die Breitenrichtung der Schicht verläuft dabei quer zur Längsrichtung der Schichten bzw. quer zur Vorschubrichtung in die Zeichenebene hinein. Die Schichtdickenrichtung wird durch die Stapelrichtung der einzelnen Schichten definiert. Auf eine Darstellung des Antriebs zur Bereitstellung des Vorschubs des Druckkopfs 1 wird aus Gründen der Übersicht verzichtet. Der Antrieb des Druckkopfs kann beispielsweise in stationären Anlagen über einen Rahmen erfolgen, innerhalb dessen die zu druckende Struktur entstehen soll. Dabei würde der Druckkopf 1 entlang von Führungsschienen gleiten oder rollen und zudem in der Höhe beweglich sein, um die einzelnen Schichten 20a, 20b drucken zu können. Für mobile Anwendungen, wie Baustellen, kann der Druckkopf auch über einen im Raum beweglichen Ausleger bewegt werden. In der Fig. 1 gezeigten Situation legt der Druckkopf 1 eine weitere Schicht 20a aus Betonmaterial ab.

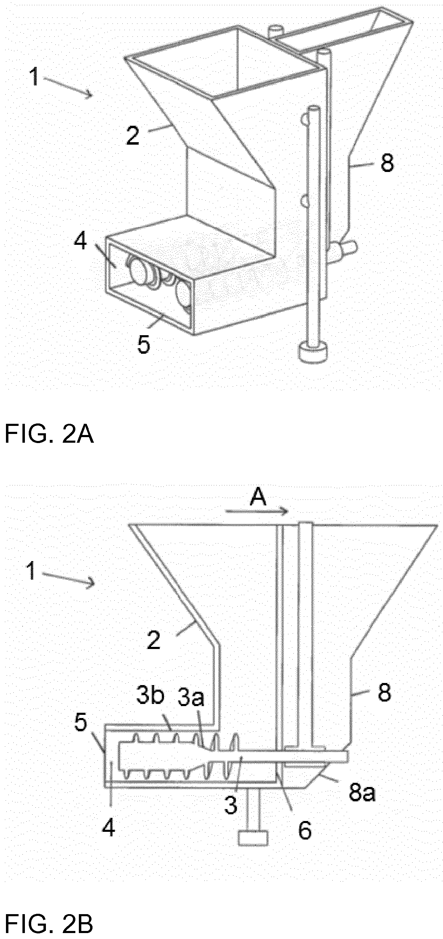

In der dreidimensionalen Ansicht Fig. 2A des Druckkopfs 1 sowie der Schnittansicht Fig. 2B ist erneut der erfindungsgemäße Druckkopf 1 vereinfacht dargestellt. Der Druckkopf 1 weist eine Zuführeinrichtung 2 auf. Die Zuführeinrichtung 2 hat zum Zweck, den im Raum beweglichen Druckkopf 1 mit Betonmaterial zu versorgen. Das Material kann beispielsweise über eine Betonpumpe in die Zuführeinrichtung 2 gespeist werden, während der Druckkopf 1 sich im Raum bewegt. Dabei hat der Druckkopf 1 inklusive Material eine geringe Masse, was es erlaubt, den Druckkopf 1 präzise im Raum zu bewegen und die Abstützung des Druckkopfs 1 erleichtert. Andererseits kann der Druckkopf 1 aber auch vor dem Bewegungsvorgang mit Material befüllt werden. Als Betonmaterial wird vorzugsweise ein Beton mit trockenem Mischungsverhältnis verwendet mit einem Wasser/Zement Verhältnis zwischen 0,23 und 0,35. Das Wasser/Zementverhältnis (w/z) gibt ein Masseverhältnis zwischen der in 1 m³ Beton vorhandenen Masse Wasser im Vergleich zu Zement an.

Weiterhin hat der Druckkopf 1 die Fördereinrichtung 3, welche hier als Schneckeneinrichtung ausgeführt ist. Wie in Fig. 2A gezeigt, wird die Fördereinrichtung 3 bevorzugt in Form von zwei Schnecken gebildet. Durch den wechselnden Eingriff der Schneckengänge in das Material wird dabei eine gute Durchmischung und ein homogenes Material erzielt. Die Fördereinrichtung 3 kann aber auch nur durch eine Schnecke oder durch eine nicht beanspruchte Pumpe gebildet werden. Die Fördereinrichtung 3 wird mit Material aus der Zuführeinrichtung 2 gespeist und fördert dieses entgegen der Vorschubrichtung, basierend auf dem Prinzip der Zwangsförderung in einen formgebenden Abschnitt 4. Vorzugsweise weist die Schnecke einen sich vergrößernden Abschnitt 3a auf, in dem der Schneckendurchmesser zunimmt und die Spaltbreite zwischen Schnecke 3 und Gehäusewand 3b abnimmt. Dabei wird das Betonmaterial komprimiert und aufgrund der kleineren Spaltbreite nimmt die Scherrate zu, was einen Druckaufbau in dem Material bewirkt. Somit wird das Betonmaterial unter Druck in den formgebenden Abschnitt 4 gefördert. Dadurch, dass das Material unter Druck den formgebenden Abschnitt 4 befüllt, kann das Material den Querschnitt des formgebenden Abschnitts 4 ganzheitlich befüllen, vor allem über die gesamte Breite des formgebenden Abschnitts 4. Der Druck im Material bewirkt, dass der Beton formstabil ist und anfängt abzubinden. Somit können durch den formgebenden Abschnitt 4 zumindest die seitlichen Abmessungen der abzulegenden Schicht festgelegt werden. Das im Querschnitt zumindest bezüglich der seitlichen Abmessungen festgelegte Material tritt aus einem Austrittsabschnitt 5, der entgegen der Vorschubrichtung A nach außen weist, ins Freie aus ohne die seitlichen Abmessungen zu verändern, da das Material durch das geringe w/z Verhältnis eine gute Formstabilität besitzt. Zusätzlich ist der Austrittsverhinderungsabschnitt 6 vorgesehen, der ein Austreten des Betonmaterials, welches aufgrund des aufgebauten Druckes auch in Vorschubrichtung strömen kann, aus dem Druckkopf 1 in Vorschubrichtung A verhindert. Es entsteht ein an fünf Seiten, durch die Gehäusewand 3b oben, unten sowie beidseits seitlich und den Austrittsverhinderungsabschnitt 6, in Vorschubrichtung abgeschlossener Raum und die Schicht lässt sich entlang einer definierten Richtung entgegen der Vorschubrichtung A ablegen und ein Betonmaterialaufstau vor dem Druckkopf kann unterbunden werden. Somit kann eine stabile Schicht mit guter Oberflächenqualität abgelegt werden. Weiterhin weist der Druckkopf 1, wie in Fig. 2A und 2B gezeigt, vorzugsweise eine Bindematerialverarbeitungseinrichtung 8 auf. Mit der Bindematerialverarbeitungseinrichtung 8 kann zwischen benachbarte Schichten 20a des Betonmaterials zumindest eine Schicht 20b aus einem Bindematerial aufgebracht werden, wie in Fig. 1 gezeigt. Das Bindematerial ist vorzugsweise ein Beton mit höherem Wasser/Zement Verhältnis, ein Fugenmörtel oder gar ein Industriekleber. Das trockene Betonmaterial, welches ein schnelles Abbinden begünstigt, bedingt unter Umständen eine schlechte Anbindung an die nächste Schicht 20a. Die Schicht 20b aus Bindematerial verbindet die einzelnen Schichten 20a aus Betonmaterial miteinander und eliminiert so die Fuge als Schwachstelle. Wie in Fig. 2B gezeigt, weist die Bindematerialverarbeitungseinrichtung 8 einen sich im Wesentlichen nach unten öffnenden Austrittsabschnitt 8a auf. Damit kann das Bindematerial durch Wirkung der Schwerkraft auf die darunterliegende Schicht 20a aus Beton aufgebracht werden, was eine einfache Verarbeitung ermöglicht. Der Austrittsabschnitt 8a ist bevorzugt in Vorschubrichtung A vor dem Austrittsabschnitt 5 für das Betonmaterial angeordnet. Damit ist das Bindematerial bereits auf der darunterliegenden Schicht 20a des Betonmaterials aufgebracht und kann durch das Gewicht der abzulegenden Schicht 20a aus Betonmaterial großflächig verteilt werden. Überschüssiges Bindematerial würde dabei seitlich herausgepresst werden.

Wie in Fig. 1 gezeigt, kann der Druckkopf weiterhin eine Energiezuführeinrichtung 14 aufweisen. In Fig. 1 ist diese Energiezuführeinrichtung 14 in Form von Heizbändern entlang des formgebenden Abschnitts 4 ausgeführt. Alternativ können auch vibrierende Platten vorgesehen sein, die den Beton entweder im formgebenden Abschnitt 4, oder bereits hinter dem Austrittsabschnitt 5 an den Rändern mit einer bestimmten Frequenz, beispielsweise 120 Hz, klopfen. Das Betonmaterial kann auch durch Mikrowellen bestrahlt werden. Durch all diese Methoden wird dem Betonmaterial Energie zugeführt, welche das Abbinden des Materials beschleunigt, so dass das Material aus dem Austrittsabschnitt im Wesentlichen formbeständig austritt oder danach weiterhin schnell abbindet. Damit wird die Stabilität und Oberflächenqualität der Struktur erhöht.

Fig. 1 zeigt weiterhin scheibenförmige Kellen 15, die die Scheibenglättungseinrichtung gemäß der vorliegenden Erfindung bilden, die zu beiden Seiten des Druckkopfs 1 an dem Druckkopf angebracht sind. Diese Scheibenglättungseinrichtung 15 kann die bereits abgelegten Schichten glättend durch Abreibung von Material bearbeiten, wobei die Oberflächenqualität und die Maßhaltigkeit der seitlichen Abmessungen der Struktur verbessert werden. Insbesondere kann somit überschüssiges Bindematerial entfernt werden und beispielsweise in einem Auffangbehälter 16 gesammelt werden. Weiterhin kann die Scheibenglättungseinrichtung 15 den Druckkopf führen, da sie geeignet ist, eine Bewegung quer zur Vorschubrichtung in einer horizontalen Richtung zu unterbinden, indem die scheibenförmigen Kellen durch die bereits abgelegten Schichten an der Bewegung in dieser Richtung gehindert werden.

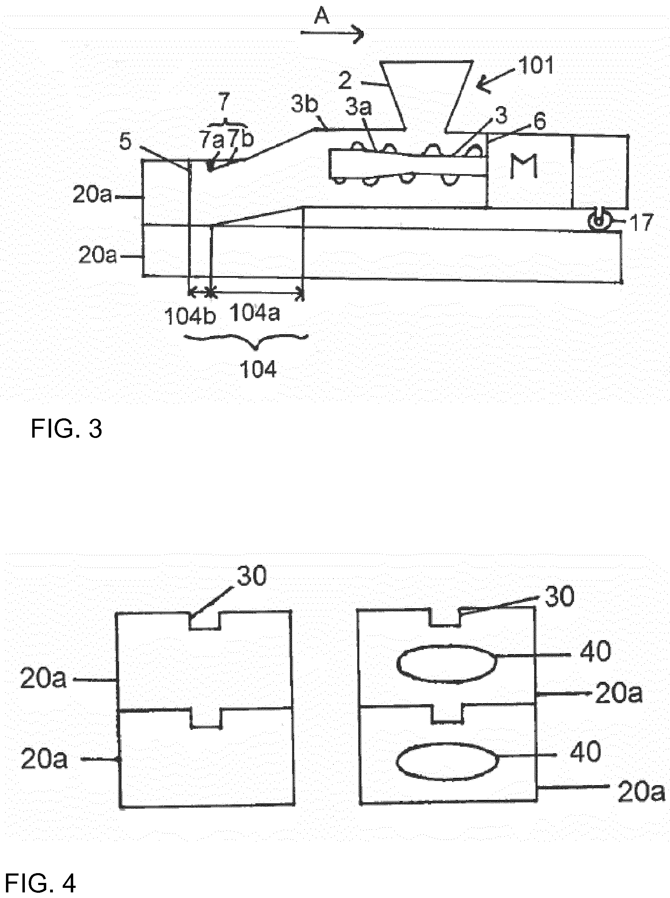

Eine weitere Ausführungsform ist in Fig. 3 gezeigt. Der Druckkopf 1 ähnelt dem Druckkopf 1 der ersten Ausführungsform. Der Druckkopf 101 weist allerdings einen veränderten formgebenden Abschnitt 104 auf. Dieser besteht aus einem sich verjüngenden zur darunterliegenden Schicht 20a verlaufenden Abschnitt 104a und einem geraden entgegen der Vorschubrichtung A verlaufenden Abschnitt 104b. Da der sich verjüngende Abschnitt 104a vorgesehen ist, kann der Druck vor dem formgebenden Abschnitt 104 durch Materialaufstau weiter erhöht werden. Dieser Druck wird dann in dem sich verjüngenden Abschnitt 104a abgebaut, während das Betonmaterial durch die Neigung des sich verjüngenden Abschnitts 104a zur darunterliegenden Schicht strömt. Somit kann der Höhenversatz zwischen der Achse der Schnecken 3 sanft behoben werden, und es findet kein schlagartiges Absinken des Betonmaterial am Austrittsabschnitt 5 auf. Das Abbinden des Materials findet unter dem verbleibenden Druck im Abschnitt 104b statt. Der Abschnitt 104b wird nicht mehr nur durch die Gehäusewand 3b definiert, sondern durch die untere Schicht 20a aus Betonmaterial. Das Betonmaterial sollte beim Übergang zwischen dem geneigten sich verjüngenden Abschnitt 104a und dem geraden Abschnitt noch fließfähig sein, um ein Verhaken zu verhindern.

Weiterhin weist der Druckkopf 101 eine Profilierungseinrichtung 7 auf, die sich innerhalb des formgebenden Abschnitts 104 befindet. Die Profilierungseinrichtung 7 wird durch ein elastisches Element 7a und eine Klappe 7b gebildet. Durch die Profilierungseinrichtung 7 besteht die Möglichkeit mit ein und demselben Druckkopf Schichten verschiedener Dicke abzulegen. Die Klappe 7b kann beispielsweise über einen Motor in verschiedene Stellungen rotiert werden. Sie kann dementsprechend mit verschiedener Tiefe in den Querschnitt des formgebenden Abschnitts 104 hineinragen und dabei die Schichtdicke, also die Höhe der Schicht, von Schicht zu Schicht unterschiedlich gestalten. Die Klappe 7b kann aber auch während des Ablegens einer Schicht verstellt werden und somit kann die Schichtdicke auch innerhalb einer Schicht in Längsrichtung der Schicht variiert werden. Die Klappe 7b muss ferner nicht über die gesamte Breite des formgebenden Abschnitts ausgeführt werden, sondern kann auch nur in einem Abschnitt in Breitenrichtung des formgebenden Abschnitts 104 vorgesehen sein, weshalb die Schichtdicke in Breitenrichtung der Schicht variiert. Somit erzeugt die Klappe 7b zumindest einen bezüglich der Schichtdicke konkaven Abschnitt entlang der Breitenrichtung der Schicht 20a aus Betonmaterial. Dadurch kann Material der darüber liegenden Schicht einfach in diesen konkaven Abschnitt strömen. Dabei kommt es zu einem Formschluss benachbarter Schichten, welcher eine gute Stabilität der gedruckten Struktur sicherstellt. Dies ist beispielhaft in Fig. 4 dargestellt, welche einen Querschnitt durch die gedruckte Struktur darstellt. Es kann ein konkaver Abschnitt 30 ausgebildet werden, in den Material der darüber liegenden Schicht 20a strömt und dort abbindet. Weiterhin ist in dem Druckkopf 101 die Profilierungseinrichtung 7 als die Druckausgleichseinrichtung ausgebildet. Durch die Anbindung der Klappe 7b an den Druckkopf 101 über das elastische Element 7a, kann die Klappe 7b unter Druckschwankungen verstellt werden. Somit wird die Druckschwankung ausgeglichen und die Schichtdicke gegebenenfalls lokal variiert. Diese Schichtdickenänderungen können mit den darüber liegenden Schichten ausgeglichen werden.

In Fig. 4 ist rechts ebenfalls ein konkaver Abschnitt 30 vorgesehen. Allerdings sind die Schichten 20a mit einem Hohlraum 40 versehen. Dieser Hohlraum 40 kann beispielsweise über einen Dorn in die Schicht eingebracht werden, der über Stege an der Gehäusewand 3b des formgebenden Abschnitts befestigt ist. Das macht die Struktur besonders leicht, da Material gespart wird.

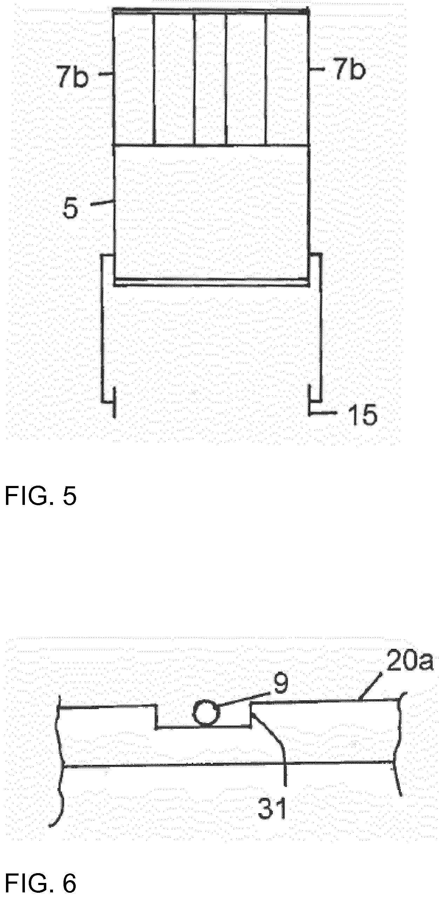

Fig. 5 zeigt schließlich schematisch einen Druckkopf mit Blickrichtung auf den Austrittsabschnitt 5 des Druckkopfs. Wie in Fig. 5 gezeigt, weist der Druckkopf mehrere Klappen 7b über die Breitenrichtung des formgebenden Abschnitts auf, die von der Oberseite in den formgebenden Abschnitt ragen. Diese Klappen 7b sind regelbar und können individuell angesteuert werden und somit lassen sich verschiedene Konturen mit wechselnden konkaven und konvexen Abschnitten auf der Oberseite der Schicht erzeugen. Dabei kann die Anbindung der einzelnen Schichten weiter verbessert werden. Es ist dabei ferner möglich, einzelne Klappen 7b komplett in eine geschlossene Stellung zu bringen. Die geschlossene Stellung einer Klappe 7b ist die, in der die Klappe 7b auf der unteren Schicht aufliegt. Somit kann der Querschnitt in dem formgebenden Abschnitt in Breitenrichtung teilweise verschlossen werden. Werden von der Vielzahl von Klappen 7b die äußeren in Breitenrichtung in eine geschlossene Stellung gebracht, lässt sich die Breite der abzulegenden Schicht variieren. Wird hingegen eine innenliegende Klappe 7b in eine geschlossene Stellung gebracht, kann die abzulegende Schicht zumindest abschnittsweise in zumindest zwei parallel verlaufende Stränge aufgeteilt werden, die formstabil aus dem Austrittsabschnitt 5 austreten. Dabei treten zumindest zwei quer zur Vorschubrichtung des Druckkopfs beabstandete Stränge aus dem Austrittsabschnitt 5 aus. Somit lässt sich beispielsweise eine Doppelwand fertigen.

Fig. 6 zeigt einen Ausschnitt einer Schicht 20a aus Betonmaterial, wobei ein konkaver Abschnitt 31 in Längsrichtung der Schicht vorgesehen wurde. Dieser Abschnitt kann beispielsweise durch kollektives Herunterfahren in eine teilweise geschlossene Stellung der Klappen des Druckkopfs in Fig. 5 erreicht werden. In solch einen konkaven Abschnitt 31 kann ein Bewehrungselement 9 eingelegt werden, das mit der nächsten Schicht einbetoniert wird. Das Bewehrungselement 9 kann auch seitlich aus der Schicht 20 a herausragen und in einen gegenüberliegenden konkaven Abschnitt 31 der selben Schicht 20a ragen. Somit lässt sich die Stabilität zwischen einzelnen Schichtabschnitten verbessern.

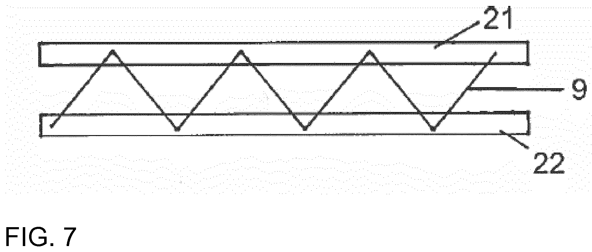

Dies ist besonders vorteilhaft beim Fertigen einer Doppelwand, wobei konkave Abschnitte 31 an derselben Position oder auch an alternierenden Positionen in Vorschubrichtung des Druckkopfs in den parallelverlaufenden Strängen vorgesehen sein können. Beispielhaft ist eine Doppelwand in Fig. 7 in einer Draufsicht gezeigt. Die Doppelwand wird geformt, indem jede abgelegte Schicht durch zwei parallel verlaufende und voneinander beabstandete Stränge 21 und 22 ausgebildet wird. Weiterhin können die parallel verlaufenden Stränge über Bewehrungselemente bzw. Verbindungselemente 9 quer zur Vorschubrichtung in einer horizontalen Richtung stabilisiert werden. Diese Bewehrungselemente können aus einem Magazin, welches der Druckkopf aufweist, von einer Bewehrungseinsatzeinrichtung entnommen werden und in die Schichten aus Betonmaterial eingesetzt werden. In Fig. 7 ist ein gitterartiges Verbindungselement 9 gezeigt, welches die beiden Stränge 21 und 22 in einer horizontalen Richtung miteinander verbindet. Dabei können beispielsweise konkave Abschnitte an alternierenden Positionen bezüglich der Stränge 21 und 22 in Vorschubrichtung des Druckkopfs vorgesehen werden, die das Einsetzen des Verbindungselementes erleichtern. Beim nachträglichen Befüllen des Zwischenraums zwischen den von den Strängen 21 und 22 gebildeten Wandteilen mit Ortsbeton kann dabei mit höheren Betoniergeschwindigkeiten gearbeitet werden.

## Patentansprüche

1. Druckkopf (1) zum Drucken dreidimensionaler Strukturen aus Beton, wobei der Druckkopf (1) ausgestaltet ist, im Raum bewegt zu werden und einzelne Schichten (20a) eines Betonmaterials,
welches die zu fertigende Struktur bildet, übereinander abzulegen, wobei der Druckkopf (1) Folgendes aufweist:
eine Zuführeinrichtung (2), die ausgestaltet ist, das Betonmaterial bereitzustellen,
eine Fördereinrichtung (3), die ausgestaltet ist, das Betonmaterial von der Zuführeinrichtung (2) aufzunehmen und zu fördern,
einen formgebenden Abschnitt (4), der ausgestaltet ist, von dem unter Druck stehenden Betonmaterial gefüllt zu werden und zumindest die seitlichen Abmessungen der abzulegenden Schicht (20a) festzulegen, wobei die Fördervorrichtung (3) dazu eingerichtet ist, das Betonmaterial entgegen einer Vorschubrichtung (A) in den formgebenden Abschnitt (4) zu fördern,
einen entgegen der Vorschubrichtung (A) des Druckkopfs (1) weisenden Austrittsabschnitt (5), wobei
der Druckkopf (1) weiterhin aufweist:
einen Austrittsverhinderungsabschnitt (6), der ausgestaltet ist, ein Austreten des Betonmaterials in Richtung der Vorschubrichtung (A) des Druckkopfs (1) zu verhindern,
wobei
die Fördereinrichtung (3) eine Schneckeneinrichtung ist, **dadurch gekennzeichnet, dass**
der formgebende Abschnitt (4) eine regelbare Profilierungseinrichtung (7) aufweist, die ausgestaltet ist, die Schichtdicke der abzulegenden Schicht variieren zu können, und
die Profilierungseinrichtung (7) ausgestaltet ist, zumindest einen Abschnitt entlang der Breitenrichtung der Schicht (20a) aus Betonmaterial bezüglich der Schichtdicke konkav auszubilden.

2. Druckkopf (1) nach Anspruch 1, wobei der Druckkopf (1) einen Druckausgleichsabschnitt (7) aufweist, vorzugsweise innerhalb des formgebenden Abschnitts (4).

3. Druckkopf (1) nach Anspruch 1 oder 2, wobei der Druckkopf (1) weiterhin eine Energiezuführeinrichtung (14) aufweist, die ausgestaltet ist, dem Betonmaterial innerhalb des formgebenden Abschnitts (4) Energie zuzuführen.

4. Druckkopf (1) nach Anspruch 2, wobei die Profilierungseinrichtung (7) den Druckausgleichsabschnitt (7) bildet.

5. Druckkopf (1) nach Anspruch 4, wobei die Profilierungseinrichtung (7) zumindest ein elastisches Element (7a) und zumindest eine Klappe (7b) aufweist, und die Klappe (7b) über das elastische Element (7a) an dem Druckkopf (1) angebracht ist.

6. Druckkopf (1) nach einem der vorangegangenen Ansprüche, wobei der Druckkopf (1) weiterhin eine Bindematerialverarbeitungseinrichtung (8) aufweist, die ausgestaltet ist, zwischen benachbarte Schichten (20a) des Betonmaterials zumindest eine Schicht (20b) aus einem Bindematerial abzulegen.

7. Druckkopf (1) nach Anspruch 6, wobei die Bindematerialverarbeitungseinrichtung (8) einen sich im Wesentlichen nach unten öffnenden Austrittsabschnitt (8a) aufweist.

8. Druckkopf (1) nach einem der vorangegangen Ansprüche, wobei der Druckkopf zusätzlich ein Magazin zum Lagern von Bewehrungselementen oder Verbindungselementen (9), und eine Bewehrungseinsatzeinrichtung, die ausgestaltet ist, Bewehrungselemente oder Verbindungselemente (9) in die Schichten aus Betonmaterial horizontal oder vertikal einzusetzen, aufweist.

9. Druckkopf (1) nach einem der vorangegangenen Ansprüche, wobei der Druckkopf weiterhin eine Scheibenglättungseinrichtung (15) aufweist, die ausgestaltet ist, die Übergänge der bereits abgelegten Schichten (20a) abzureiben und dadurch zu glätten, wobei die Scheibenglättungseinrichtung vorzugsweise ausgestaltet ist, den Druckkopf (1) zu führen.

10. Verfahren **gekennzeichnet durch** die Verwendung eines Druckkopfes nach einem der vorangegangenen Ansprüchen, um Schichten aus Betonmaterial übereinander abzulegen, wobei als Betonmaterial ein Beton mit trockenem Mischungsverhältnis, vorzugsweise mit einem Wasser/Zement Verhältnis (w/z) zwischen 0,23 und 0,35 verwendet wird.

11. Ein Rahmen mit dem Druckkopf (1) nach einem der Ansprüche 1 bis 9, wobei der Druckkopf (1) entlang Führungsschienen des Rahmens beweglich ist.

12. Ein im Raum beweglicher Ausleger mit dem Druckkopf (1) nach einem der Ansprüche 1 bis 9.

## Claims

1. Print head (1) for printing three-dimensional structures made of concrete, where said print head (1) is configured to be moved in space and to deposit individual layers (20a) of a concrete material one on top of the other which forms the structure to be produced, said print head (1) comprising:
a feeder (2) which is configured to provide said concrete material,
a conveying device (3) which is configured to receive said concrete material from said feeder (2) and convey it,
a shaping section (4) which is configured to be filled by the pressurized concrete material and to define at least the lateral dimensions of said layer (20a) to be deposited,
wherein the conveying device (3) is configured to convey the concrete material into the shaping section (4) in a direction opposite to a feed direction (A),
an exit section (5) pointing in a direction opposite to the feed direction (A) of said print head (1), where
said print head (1) further comprises:
an exiting prevention section (6) which is configured to prevent said concrete material from exiting in the direction of said feed direction (A) of said print head (1),
where
said conveying device (3) is an auger device **characterized in that**
said shaping section (4) comprises a controllable profiling device (7) which is configured to be able to vary the layer thickness of the layer to be deposited, and
said profiling device (7) is configured to form at least one section along the width direction of said layer (20a) made of concrete material to be concave with regard to the layer thickness.

2. Print head (1) according to claim 1, where said print head (1) comprises a pressure compensation section (7), preferably within said shaping section (4).

3. Print head (1) according to claim 1 or 2, where said print head (1) further comprises an energy supply device (14) which is configured to supply energy to said concrete material within said shaping section (4).

4. Print head (1) according to claim 2, where said profiling device (7) forms the pressure compensation device (7).

5. Print head (1) according to claim 4, where said profiling device (7) comprises at least one elastic element (7a) and at least one flap (7b), and said flap (7b) is attached to said print head (1) by way of said elastic element (7a).

6. Print head (1) according to one of the preceding claims, where said print head (1) further comprises a binding material processing device (8) which is configured to deposit at least one layer (20b) of a binding material between adjacent layers (20a) of the concrete material.

7. Print head (1) according to claim 6, where said binding material processing device (8) comprises an exit section (8a) which opens substantially downwardly.

8. Print head (1) according to one of the preceding claims, where said print head additionally comprises a magazine for storing reinforcement elements or connection elements (9), and a reinforcement insertion device which is configured to insert reinforcement elements or connection elements (9) horizontally or vertically into said layers of concrete material.

9. Print head (1) according to one of the preceding claims, where said print head further comprises a trowel smoothing device (15) which is configured to rub off the transitions of said already deposited layers (20a) and to thereby smooth them, where said trowel smoothing device is preferably configured to guide said print head (1).

10. Method **characterized by** the use of a print head according to one of the preceding claims to deposit layers of concrete material one on top of the other, where a concrete with a dry mixing ratio, preferably with a water/cement ratio (w/c) between 0.23 and 0.35 is used as concrete material.

11. A frame with the print head (1) according to one of the claims 1 to 9, where the print head is movable along guiding rails of the frame.

12. A boom movable in space with the print head (1) according to one of the claims 1 to 9.

## Revendications

1. Tête d'impression (1) pour l'impression de structures tridimensionnelles en béton, dans laquelle la tête d'impression (1) est conçue pour être déplacée dans l'espace et pour superposer des couches individuelles (20a) d'un matériau en béton, qui constitue la structure à fabriquer, dans laquelle la tête d'impression (1) présente les caractéristiques suivantes :
un dispositif d'alimentation (2) conçu pour fournir le matériau en béton,
un dispositif de convoyage (3) conçu pour recevoir et transporter le matériau en béton provenant du dispositif d'alimentation (2),
une section de conformation (4) conçue pour être remplie avec le matériau en béton sous pression et pour définir au moins les dimensions latérales de la couche à poser (20a), dans laquelle le dispositif de convoyage (3) est configuré pour convoyer le matériau en béton en direction opposée à une direction d'alimentation (A) dans la section de conformation (4),
une section de décharge (5) pointant en direction opposée à la direction d'alimentation (A) de la tête d'impression (1),
dans laquelle la tête d'impression (1) comporte en outre :
une section de prévention de décharge (6) conçue pour empêcher une décharge du matériau en béton dans la direction d'alimentation (A) de la tête d'impression (1),
dans laquelle le dispositif de convoyage (3) est un convoyeur à vis,
**caractérisée en ce que**
la section de conformation (4) comporte un dispositif de profilage réglable (7) conçu pour pouvoir faire varier l'épaisseur de la couche à déposer, et
le dispositif de profilage (7) est conçu pour former au moins une section concave en direction de la largeur de la couche (20a) en matériau en béton par rapport à l'épaisseur de la couche.

2. Tête d'impression (1) selon la revendication 1, dans laquelle la tête d'impression (1) comporte une section d'égalisation de pression (7), de préférence dans la section de conformation (4).

3. Tête d'impression (1) selon la revendication 1 ou 2, dans laquelle la tête d'impression (1) comprend en outre un dispositif d'alimentation en énergie (14) configuré pour alimenter de l'énergie au matériau en béton dans la section de conformation (4).

4. Tête d'impression (1) selon la revendication 2, dans laquelle le dispositif de profilage (7) constitue la section d'égalisation de pression (7).

5. Tête d'impression (1) selon la revendication 4, dans laquelle le dispositif de profilage (7) comporte au moins un élément élastique (7a) et au moins un clapet (7b), et le clapet (7b) est monté sur la tête d'impression (1) via l'élément élastique (7a).

6. Tête d'impression (1) selon l'une des revendications précédentes, dans laquelle la tête d'impression (1) comprend en outre un dispositif de traitement de matériau liant (8) configuré pour déposer au moins une couche (20b) d'un matériau liant entre des couches adjacentes (20a) du matériau en béton.

7. Tête d'impression (1) selon la revendication 6, dans laquelle le dispositif de traitement de matériau liant (8) comporte une section de décharge (8a) qui s'ouvre substantiellement vers le bas.

8. Tête d'impression (1) selon l'une des revendications précédentes, dans laquelle la tête d'impression comprend en outre un magasin pour stocker des éléments de renfort ou des éléments de connexion (9) et un dispositif d'insertion de renfort configuré pour insérer des éléments de renfort ou des éléments de connexion (9) horizontalement ou verticalement dans les couches de matériau en béton.

9. Tête d'impression (1) selon l'une des revendications précédentes, dans laquelle la tête d'impression comprend en outre un dispositif de lissage à disque (15) conçu pour abraser, et ainsi lisser, les transitions des couches (20a) déjà déposées, dans laquelle le dispositif de lissage à disque est de préférence conçu pour guider la tête d'impression (1).

10. Procédé **caractérisé par** l'utilisation d'une tête d'impression selon l'une des revendications précédentes pour superposer des couches de matériau en béton, dans lequel le matériau en béton utilisé est un béton avec un rapport de mélange sec, de préférence avec un rapport eau/ciment (e/c) compris entre 0,23 et 0,35.

11. Châssis comportant la tête d'impression (1) selon l'une des revendications 1 à 9, dans lequel la tête d'impression (1) est mobile le long de rails de guidage du châssis.

12. Bras mobile dans l'espace comportant la tête d'impression (1) selon l'une des revendications 1 à 9.
